# EUROPEAN PATENT APPLICATION

(11) **EP 4 733 031 A1**
(43) Date of publication of application: **29.04.2026**
(21) Application number: 24825188.6
(22) Date of filing: 14.06.2024
(51) Int. Cl.: B29C 45/00, B29C 49/20

(54) **PROCESS FOR FORMING PLASTIC CLAMSHELL-TYPE CAVITY STRUCTURE WITH FLOW GUIDE PARTITION INSIDE**

(30) Priority: 20.06.2023 CN 202310735173
(71) Applicant: Yapp Automotive Systems Co., Ltd., Yangzhou, Jiangsu 225009 (CN)
(72) Inventor: JIANG, Lin, Yangzhou, Jiangsu 225009 (CN); GAO, Dejun, Yangzhou, Jiangsu 225009 (CN); CONG, Wenlong, Yangzhou, Jiangsu 225009 (CN); GE, Xueji, Yangzhou, Jiangsu 225009 (CN)
(74) Representative: Proi World Intellectual Property GmbH
(86) International application number: PCT/CN2024/099105
(87) International publication number: WO 2024/260292

(57) **Abstract**

The present invention relates to a process for forming a plastic clamshell-type cavity structure with a flow guide partition inside. According to the solution, pre-forming of two shells is first completed respectively by means of a pre-forming mold and two half injection molds, main body structures of the shells are cooled and shaped in the pre-forming stage, but an area to be welded is still in a high-temperature and weldable state; the two half injection molds are opened, and the pre-forming mold is moved out; the left and right half molds are closed for the second time, by means of a mold closing force, the shells in the two half molds make contact and are squeezed, and finally welding is implemented; by means of the positions of an inlet and an outlet of the product itself, the mold can introduce pressurized air into a cavity, thereby further enhancing the cooling and shaping of the product; and finally, the product is formed and taken out.

## Description

### TECHNICAL FIELD

The present invention relates to a molding process, and more particularly to a molding process for a plastic clamshell cavity structure with an internal flow guide barrier, and pertains to the extension and expansion of the field of injection molding processing technology.

### BACKGROUND OF THE INVENTION

The parts of the plastic clamshell cavity structure with an internal flow guide barrier are a common type of part in the injection molding field. Such parts are typically welded into an entirety by two separate left and right parts, thereby forming a hollow cavity structure with a flow guide barrier, such as conventional oil-gas separation parts, oil-liquid separation parts, and the like. If there is no strict sealing requirement between the flow guide barriers, a physical barrier formed by male-female engagement may be adopted; if there is a sealing requirement between the flow guide barriers, a welding process is generally adopted. In conventional technology, clamshell-like parts are usually completed utilizing a process of first injection molding and then heating and welding. In terms of hardware, the conventional process utilizes two sets of injection molding equipment and welding equipment. In terms of the molding process flow, it utilizes the coordinated completion of two sets of processes, namely injection molding and welding. Coupled with many external uncontrollable factors such as logistics transit of the parts, the cycle time is long, the equipment investment is large, and there are many external uncontrollable factors in the manufacturing process, so the quality control of the product is also relatively difficult. Because hot-melt welding has high requirements for the process, there are usually strict requirements for conditions such as welding time, welding temperature, welding pressure, and ambient temperature. Slight changes in the process conditions can easily cause a local cold weld, leading to a risk of leakage, and this defect is not easily detected after its occurrence. Therefore, there is an urgent need for a new solution to solve the problem.

### SUMMARY OF THE INVENTION

The present invention is directed to the problems existing in the conventional technology, and provides a molding process for a plastic clamshell cavity structure with an internal flow guide barrier. The technical solution solves the problem of cold weld in clamshell-like parts, while achieving improved production efficiency by efficiently integrating injection molding and welding processes, allowing the welding to be directly completed in the injection molding step, thereby simplifying the process flow and further ensuring product quality.

In order to achieve the above-mentioned object, the technical solution of the present invention is as follows: a molding process for a plastic clamshell cavity structure with an internal flow guide barrier, wherein the process comprises the following steps:
Step 1: being a left mold half and a right mold half in a separate and open state, and locating a pre-forming mold outside a movement area of the mold;
Step 2: driving the pre-forming mold by means of a moving platform to move in between the two mold halves;
Step 3: moving the left mold half and the right mold half relative to each other and clamping the pre-forming mold, thereby completing a first clamping, wherein the contour on both sides of the pre-forming mold coincides with the parting line contour of the left and right mold halves, and forming two separate sealed cavities;
Step 4: injecting molten resin into a main gate of the pre-forming mold by means of a nozzle of an injection machine, and distributing the resin via a specially designed runner and injecting the resin into the left and right sealed cavities synchronously under an injection pressure, wherein the size and direction of the runner should be designed according to the size, weight and structural features of the half shells on both sides;
Step 5: disengaging the nozzle and the main gate of the pre-forming mold after the injection is completed, and completing the pre-forming of two half shells by the left and right mold halves after cooling and setting and holding pressure, wherein the time for cooling and setting and holding pressure is adjusted differently according to different products;
Step 6: opening the left and right mold halves, and removing the pre-forming mold from the movement area of the mold, wherein the half shells in the two mold halves remain in their respective molds, and cooling and setting the main structures of the half shells through temperature control of the mold and the pre-forming mold, while a welding zone remains in a high-temperature weldable state;
Step 7: removing the pre-forming mold, and completing a second clamping of the the left and right mold halves, wherein the half shells in the left and right mold halves contact and mutually press under a clamping force of the mold, ultimately fusing into a single body, and simultaneously, utilizing the inlet and outlet positions of the product itself, introducing compressed air into the cavity by the mold to further enhance the internal cooling and setting of the product;
Step 8: completely cooling and setting the product after a certain period of cooling and setting and holding pressure, wherein the time for cooling and setting and holding pressure is adjusted differently according to different products; and
Step 9: opening the mold, and taking out the product.

As an improvement of the present invention, in Step 1, an infrared heating device is provided on an outer side of a pre-forming mold, wherein the infrared heating device and the pre-forming mold are fixed together, or the infrared heating device is provided on an independent moving platform; in Step 6, after the first mold opening, the pre-forming mold is removed from the movement area of the mold, and simultaneously, the infrared heating device on the outer side of the pre-forming mold moves in synchronously between the two mold halves to perform auxiliary heating on the welding zone of the half shells in the two mold halves, thereby ensuring that the welding zone of the two half shells is maintained in a high-temperature weldable state by controlling the temperature and heating time of the mold and the infrared heating device.

As an improvement of the present invention, the moving platform is located between the two mold halves and is arranged in a cross-shape relative to the opening direction of the injection machine, preferably in a spatial vertically cross arrangement. The moving platform is mounted on a fixed base, and is movable under program control.

As an improvement of the present invention, the pre-forming mold is mounted on the moving platform, and the pre-forming mold, driven by the moving platform, is movable to move in between the left and right mold halves and be removed therefrom under program control.

As an improvement of the present invention, the contour on both sides of the pre-forming mold coincides with the parting lines of the corresponding mold halves, and forms a sealed injection space with the corresponding mold halves.

As an improvement of the present invention, the pre-forming mold is provided with a main gate and a branched runner. The main gate may be provided at the top position of the pre-forming mold, which is beneficial for the injection and distribution of the resin; the size and direction of the branched runner are designed according to the size, weight and structural features of the half shells on both sides. After the pre-forming mold and the left and right mold halves are closed, the resin entering through the main gate enters the two left and right mold halves respectively via the branched runner.

As an improvement of the present invention, the interior of the pre-forming mold is provided with a temperature control system, specifically a conventional hot runner system may be adopted in the industry to ensure that the resin in the runner does not cool during operation. Simultaneously, separate mold temperature control is performed on the welding zone of the pre-forming mold, specifically separate cooling channels are provided on the mold, and effective control is performed by means of a mold temperature controller.

Relative to the conventional technology, the advantages of the present invention are as follows: The present invention allows the injection molding and welding of the half shells on both sides to be completed synchronously on a single piece of injection molding equipment. The key molding process parameters, such as the welding temperature, pressure, and time, are controlled by the injection machine and the mold, so the parameters are relatively more controllable, the manufacturing process is shorter, and is less susceptible to interference from external uncontrollable factors, which effectively solves the problem of the conventional process easily causing the defect of cold weld, and improves the bonding quality of the seam position. Furthermore, the conventional process adopts a process of first injection molding and cooling and setting, and then heating and welding, while in the present invention, the temperature during the welding stage of the half shells is ensured by the residual heat of the product, thereby being more energy-saving and environmentally friendly; the process in the present invention is particularly suitable for replacing the conventional welding process of a plastic clamshell cavity structure with an internal flow guide barrier.

### BRIEF DESCRIPTION OF THE DRAWINGS

Fig. 1 is a schematic diagram of the initial state of the production cycle;
Fig. 2 is a schematic diagram of the state where the pre-forming mold moves in between the two mold halves;
Fig. 3 is a schematic diagram of the state where the two mold halves move relative to each other and clamp the pre-forming mold, that is, the first clamping state;
Fig. 4 is a schematic diagram of the state where the two half shells complete cooling and setting, and the pre-forming mold is removed;
Fig. 5 is a schematic diagram of the state where the two mold halves complete the second clamping;
Fig. 6 is a schematic diagram of the state where the second mold opening is performed, and the product is taken out;
Fig. 7 is a schematic diagram of the runner structure;
Fig. 8 to Fig. 15 are schematic diagrams of the entire production cycle where an infrared heating device is provided on the outer side of the pre-forming mold.

In the drawings: 1, head; 2, left mold half; 3, right mold half; 4, pre-forming mold; 5, nozzle; 6, main gate; 7, pressure gas inlet port; 8, pressure gas inlet port; 9, moving platform; 10, plastic clamshell cavity structure; 11, runner.

### DETAILED DESCRIPTION OF THE DISCLOSURE

In order to deepen the understanding of the present invention, the detailed description of the embodiments is given below with reference to the drawings.

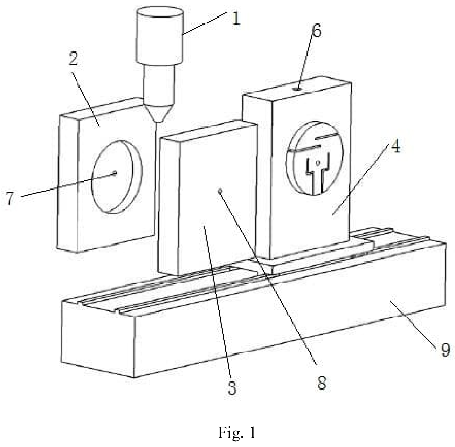

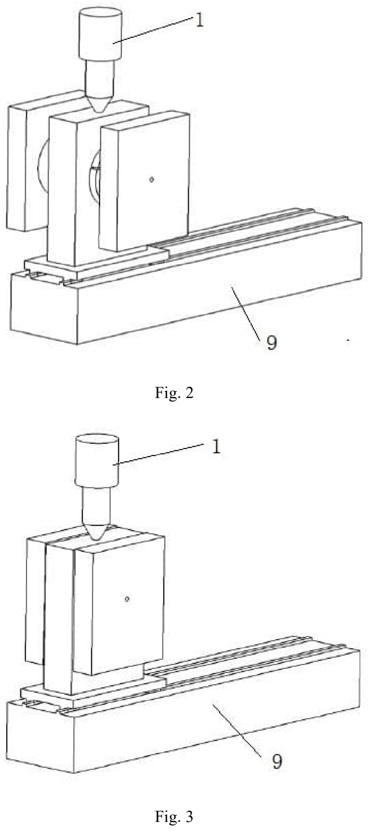

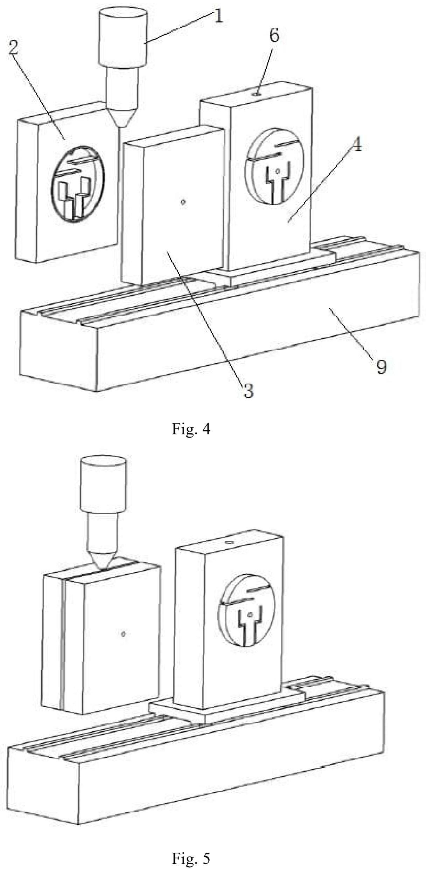

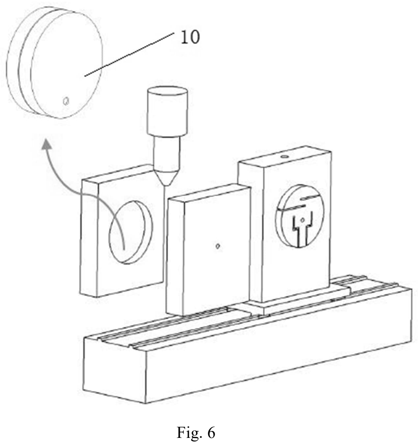

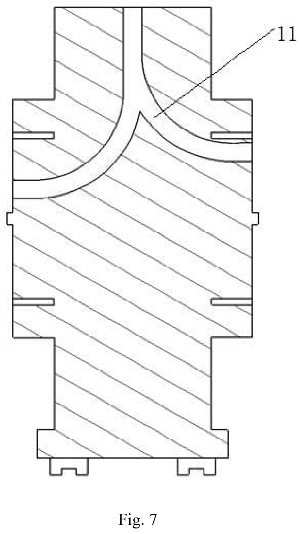

Embodiment 1: Referring to Fig. 1 to Fig. 7, the molding process for the plastic clamshell cavity structure with an internal flow guide barrier, wherein the process comprises the following steps:
Step 1: Referring to Fig. 1, the left mold half 2 and the right mold half 3 are in a separate and open state, and the pre-forming mold 4 is initially located outside the movement path of the mold;
Step 2: Referring to Fig. 2, the pre-forming mold 4 moves in between the left and right mold halves by means of a moving platform 9;
Step 3: Referring to Fig. 3, the left and right mold halves move relative to each other and clamp the middle mold, namely the pre-forming mold 4, completing a first clamping, wherein the contour on both sides of the pre-forming mold 4 coincides with the parting line contour of the left and right mold halves, and forms two separate sealed cavities;
Step 4: During the first clamping process, the head 1 of the injection machine injects molten resin into the main gate 6 of the pre-forming mold, wherein the resin is distributed via a specially designed runner 11 under an injection pressure, and is injected synchronously into the left and right sealed cavities. The size and direction of the runner are designed according to the size, weight and structural features of the half shells on both sides;
Step 5: After the injection is completed, the nozzle 5 and the main gate 6 of the pre-forming mold disengage. After a period of cooling and setting and holding pressure, the left and right mold halves pre-form two half shells. The time for cooling and setting and holding pressure is adjusted differently according to different products;
Step 6: Referring to Fig. 4, the left and right mold halves open, and the pre-forming mold 4 is removed from the mold. The half shells in the two mold halves remain in their respective molds. The main structures of the half shells are basically cooled and set through temperature control of the mold and the middle pre-forming mold, but the welding zone is in a high-temperature weldable state;
Step 7: Referring to Fig. 5, after removing the pre-forming mold 4, the left and right mold halves perform a second clamping. The half shells in the left and right two mold halves contact and press under the clamping force of the mold, ultimately fusing into a single body. Simultaneously, utilizing the inlet and outlet positions of the product itself, the mold introduces compressed air inside the cavity through the pressure gas inlet port 7 to further enhance the internal cooling and setting of the product;
Step 8: Referring to Fig. 6, after a certain period of cooling and setting and holding pressure, the product is completely cooled and set. The time for cooling and setting and holding pressure is adjusted differently according to different products;
Step 9: The left and right mold halves open, the product is formed and taken out.

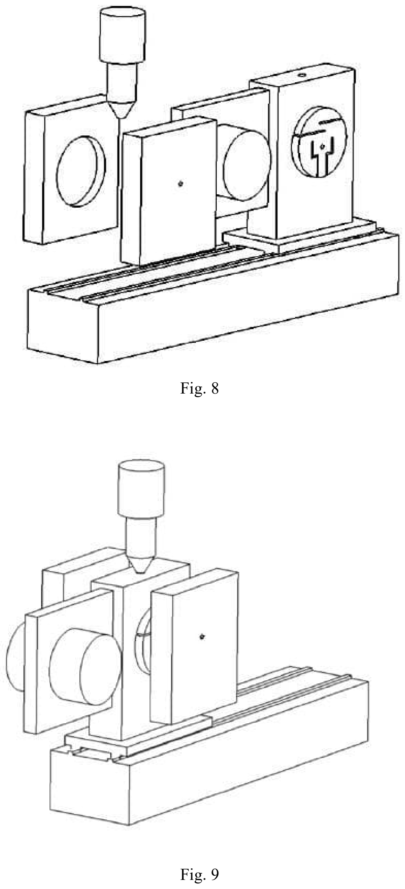

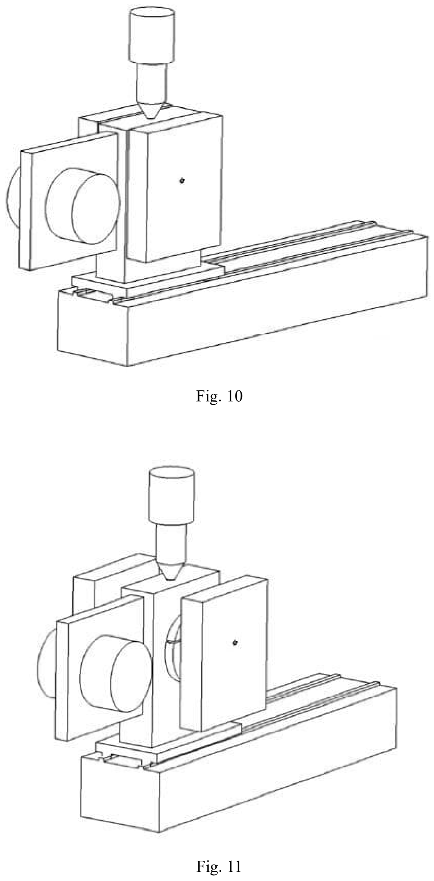

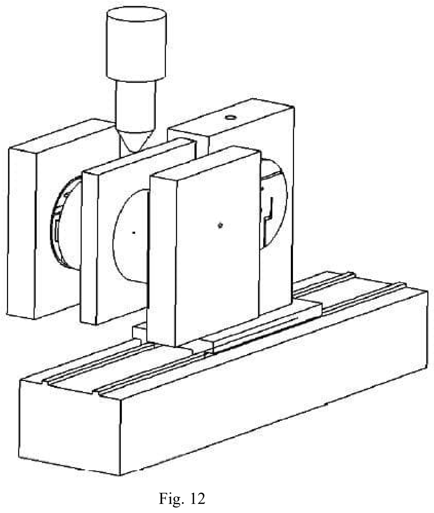

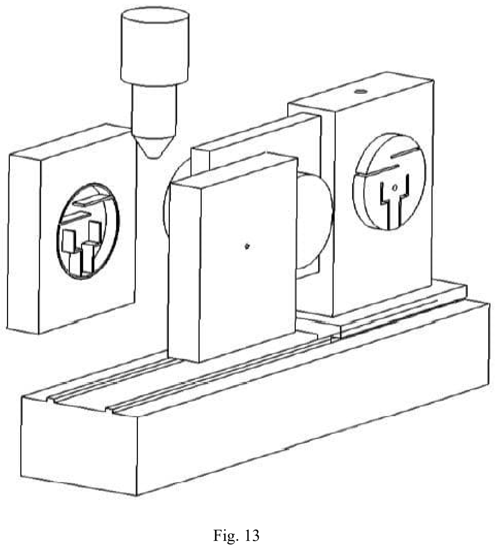

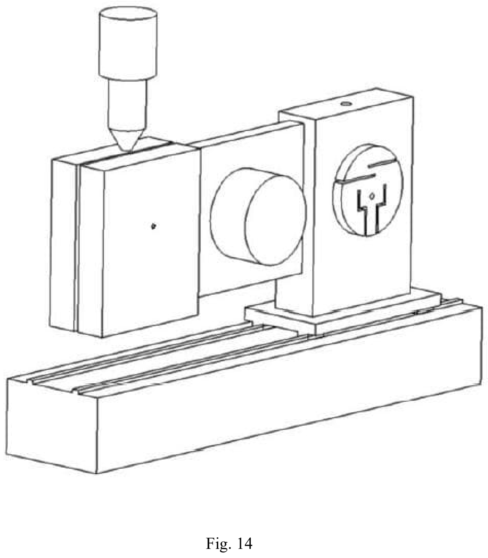

Embodiment 2: Referring to Fig. 8 to Fig. 15, the molding process for the plastic clamshell cavity structure with an internal flow guide barrier, wherein the process comprises the following steps:
Step 1: Referring to Fig. 8, the left mold half 2 and the right mold half 3 are in a separate and open state, and the pre-forming mold 4 is initially located outside the movement path of the mold. In this embodiment, an infrared heating device is provided on the outer side of the pre-forming mold 4, and is movable synchronously with the pre-forming mold. As an equivalent alternative, the infrared heating device may also be a separate movable apparatus.
Step 2: Referring to Fig. 9, the pre-forming mold 4 moves between the left and right mold halves by means of the moving platform 9;
Step 3: Referring to Fig. 10, the left and right mold halves move relative to each other and clamp the middle mold, namely the pre-forming mold 4, completing a first clamping, wherein the contour on both sides of the pre-forming mold 4 coincides with the parting line contour of the left and right mold halves, and forms two separate sealed cavities;
Step 4: During the first clamping process, the head 1 of the injection machine injects molten resin into the main gate 6 of the pre-forming mold, wherein the resin is distributed via the specially designed runner 11 under the injection pressure, and is injected synchronously into the left and right sealed cavities. The size and direction of the runner are designed according to the size, weight and structural features of the half shells on both sides;
Step 5: After the injection is completed, the nozzle 5 and the main gate 6 of the pre-forming mold disengage. After a period of cooling and setting and holding pressure, the left and right mold halves pre-form two half shells. The time for cooling and setting and holding pressure is adjusted differently according to different products;
Step 6: Referring to Fig. 11 and Fig. 12, the left and right mold halves open, and the pre-forming mold 4 is removed from the mold. The half shells in the two mold halves remain in their respective molds. The pre-forming mold is removed from the movement area of the mold, and simultaneously, the infrared heating device on the outer side of the pre-forming mold moves synchronously in between the two mold halves, and performs auxiliary heating on the welding zone of the half shells in the two mold halves. By controlling the temperature and heating time of the mold and the infrared heating device, the welding zone of the two half shells is maintained in a high-temperature weldable state;
Step 7: Referring to Fig. 14, after removing the pre-forming mold 4, the left and right mold halves perform a second clamping. The half shells in the left and right mold halves contact and press under the clamping force of the mold, ultimately fusing into a single body. Simultaneously, utilizing the inlet and outlet positions of the product itself, the mold introduces compressed air inside the cavity through the pressure gas inlet port 7 to further enhance the internal cooling and setting of the product;
Step 8: Referring to Fig. 15, after a certain period of cooling and setting and holding pressure, the product is completely cooled and set. The time for cooling and setting and holding pressure is adjusted differently according to different products;
Step 9: The left and right mold halves open, the product is formed and taken out.

Embodiment 3: Referring to Fig. 1 to Fig. 7, in the above-mentioned embodiments, the moving platform is located between the two mold halves and is arranged in a cross-shape relative to the opening direction of the injection machine, preferably in a spatial vertically cross arrangement. The moving platform is mounted on a fixed base, and is movable under program control. The remaining features are identical to those of Embodiment 1 or Embodiment 2.

Embodiment 4: Referring to Fig. 1 to Fig. 7, in the above-mentioned embodiments, the pre-forming mold 4 is mounted on the moving platform 9, and the pre-forming mold 4, driven by the moving platform, is movable to move in between the left and right mold halves and be removed therefrom under program control. The contour on both sides of the pre-forming mold coincides with the parting lines of the corresponding mold halves, and forms a sealed injection space with the corresponding mold halves. The remaining features are identical to those of Embodiment 1 or Embodiment 2.

Embodiment 5: Referring to Fig. 1 to Fig. 7, in the above-mentioned embodiments, the pre-forming mold 4 is provided with a main gate 6 and a branched runner 11. The main gate 6 may be provided at the top position of the pre-forming mold, which is beneficial for the injection and distribution of the resin; the size and direction of the branched runner 11 are designed according to the size, weight and structural features of the half shells on both sides. After the pre-forming mold and the left and right mold halves are closed, the resin entering through the main gate enters the left and right mold halves respectively via the branched runner. The remaining features are identical to those of Embodiment 1 or Embodiment 2.

Embodiment 6: Referring to Fig. 1 to Fig. 7, in the above-mentioned embodiments, the interior of the pre-forming mold is provided with a temperature control system, specifically a conventional hot runner system may be adopted in the industry to ensure that the resin in the runner does not cool during operation. Simultaneously, separate mold temperature control is performed on the welding zone of the pre-forming mold, specifically separate cooling channels are provided on the mold, and effective control is performed by means of a mold temperature controller. The remaining features are identical to those of Embodiment 1 or Embodiment 2.

Embodiment 7: Referring to Fig. 1 to Fig. 7, in the above-mentioned embodiments, the left and right injection mold halves comprise a temperature control system according to different product characteristics, specifically separate cooling channels are locally provided, and the temperature of the medium in the cooling channels is controlled by means of a mold temperature controller. The remaining features are identical to those of Embodiment 1 or Embodiment 2.

The present invention may also combine at least one of the technical features described in Embodiments 3, 4, 5, 6, and 7 with Embodiment 1 or Embodiment 2 to form new embodiments.

The present invention allows the injection molding and welding of the half shells on both sides to be completed synchronously on a single piece of injection molding equipment. The key molding process parameters, such as the welding temperature, pressure, and time, are controlled by the injection machine and the mold, so the parameters are relatively more controllable, the manufacturing process is shorter, and is less susceptible to interference from external uncontrollable factors, which effectively solves the problem of the conventional process easily causing the defect of cold weld, and improves the bonding quality of the seam position. Furthermore, the conventional process adopts a process of first injection molding and cooling and setting, and then heating and welding, while in the present invention, the temperature during the welding stage of the half shells is ensured by the residual heat of the product, thereby being more energy-saving and environmentally friendly.

It should be noted that the above-mentioned embodiments are not intended to limit the scope of protection of the present invention. Any equivalent transformation or substitution made on the basis of the above technical solution shall fall within the scope of protection of the claims of the present invention.

## Claims

1. A molding process for a plastic clamshell cavity structure with an internal flow guide barrier, **characterized in that** the process comprises the steps of:
Step 1: being a left mold half and a right mold half in a separate and open state, and locating a pre-forming mold outside a movement area of the mold;
Step 2: driving the pre-forming mold by means of a moving platform to move in between the two mold halves;
Step 3: moving the left mold half and the right mold half relative to each other and clamping the pre-forming mold, thereby completing a first clamping, wherein the contour on both sides of the pre-forming mold coincides with the parting line contour of the left and right mold halves, and forming two separate sealed cavities;
Step 4: injecting molten resin into a main gate of the pre-forming mold by means of a nozzle of an injection machine, and distributing the resin via a runner and injecting the resin into the left and right sealed cavities synchronously under an injection pressure;
Step 5: disengaging the nozzle and the main gate of the pre-forming mold after the injection is completed, and completing the pre-forming of two half shells by the left and right mold halves after cooling and setting and holding pressure;
Step 6: opening the mold, and removing the pre-forming mold from the movement area of the mold, wherein the half shells in the two mold halves remain in their respective molds, and cooling and setting the main structures of the half shells through temperature control of the mold and the pre-forming mold, while a welding zone remains in a high-temperature weldable state;
Step 7: removing the pre-forming mold, and completing a second clamping of the mold, wherein the half shells in the left and right mold halves contact and mutually press under a clamping force of the mold, ultimately fusing into a single body, and simultaneously, utilizing the inlet and outlet positions of the product itself, introducing compressed air into the cavity by the mold to further enhance the internal cooling and setting of the product;
Step 8: completely cooling and setting the product after cooling and setting and holding pressure; and
Step 9: opening the mold, and taking out the product.

2. The molding process for the plastic clamshell cavity structure with the internal flow guide barrier according to Claim 1, **characterized in that** an infrared heating device is provided on an outer side of the pre-forming mold in Step 1, wherein the infrared heating device and the pre-forming mold are fixed together, or the infrared heating device is provided with an independent moving platform, wherein in Step 6, after the first mold opening, the pre-forming mold is removed from the movement area of the mold, and simultaneously, the infrared heating device on the outer side of the pre-forming mold moves synchronously in between the two mold halves to perform auxiliary heating on the welding zone of the half shells in the two mold halves, thereby ensuring that the welding zone of the two half shells is maintained in a high-temperature weldable state by controlling the temperature and heating time of the mold and the infrared heating device.

3. The molding process for the plastic clamshell cavity structure with the internal flow guide barrier according to Claim 1 or 2, **characterized in that** the moving platform is located between the two mold halves and is arranged in a cross-shape relative to the opening direction of the injection machine, and the moving platform is mounted on a fixed base and is movable under program control.

4. The molding process for the plastic clamshell cavity structure with the internal flow guide barrier according to Claim 3, **characterized in that** the pre-forming mold is mounted on the moving platform, and the pre-forming mold, driven by the moving platform, moves in between the left and right mold halves and is removed therefrom under program control.

5. The molding process for the plastic clamshell cavity structure with the internal flow guide barrier according to Claim 4, **characterized in that** the contour on both sides of the pre-forming mold coincides with the parting lines of the corresponding mold halves, and forms a sealed injection space with the corresponding mold halves.

6. The injection molding process for the plastic clamshell cavity structure with the internal flow guide barrier according to Claim 5, **characterized in that** the pre-forming mold is provided with a main gate and a branched runner, and when the pre-forming mold and the left and right mold halves are closed, the resin entering through the main gate enters the two left and right mold halves respectively via the branched runner.

7. The molding process for the plastic clamshell cavity structure with the internal flow guide barrier according to Claim 6, **characterized in that** the interior of the pre-forming mold is provided with a temperature control system, and a hot runner system is adopted to ensure that the resin in the runner does not cool during operation.

8. The molding process for the plastic clamshell cavity structure with the internal flow guide barrier according to Claim 1, **characterized in that** a temperature control system is provided in the left and right mold halves, and separate cooling channels are locally provided, and the temperature of the medium in the cooling channels is controlled by means of a mold temperature controller.

9. The molding process for the plastic clamshell cavity structure with the internal flow guide barrier according to Claim 8, **characterized in that** the half shells of the plastic clamshell cavity structure comprise an inlet and an outlet for fluid flow, and after the mold completes the second clamping, compressed air is introduced into the inlet and outlet positions of the two half shells to further enhance the cooling and setting inside the half shells.
